# EUROPÄISCHE PATENTSCHRIFT

(11) **EP 2 278 077 B1**
(45) Veröffentlichungstag und Bekanntmachung des Hinweises auf die Patenterteilung: **24.10.2012**
(21) Anmeldenummer: 10005756.1
(22) Anmeldetag: 02.06.2010
(51) Int. Cl.: E02D 7/06, E02D 7/16

(54) **Ramm- und Bohrgerät mit klappbarer Umlenkvorrichtung**
Ramming and drilling device with foldable steering device
Engin de battage et appareil de forage dotés d'un dispositif de déviation pliable

(30) Priorität: 16.06.2009 DE 102009025084
(43) Veröffentlichungstag der Anmeldung: 26.01.2011
(73) Patentinhaber: Liebherr-Werk Nenzing GmbH, 6710 Nenzing (AT)
(72) Erfinder: Körtge, Stephan, 6700 Bludenz (AT); Koller, Alfred, 6844 Altach (AT)
(74) Vertreter: Laufhütte, Dieter

(56) Entgegenhaltungen:
- EP-A1- 1 655 415
- EP-A1- 1 830 006
- WO-A1-2008/103031
- DE-U1- 20 011 371

## Beschreibung

Die vorliegende Erfindung betrifft ein Ramm- und Bohrgerät mit einem Mäkler, einer Umlenkvorrichtung zum Umlenken eines Seils, welche am Kopf des Mäklers verschwenkbar zwischen zumindest einer Transportposition und zumindest einer Arbeitsposition angelenkt ist.

Gattungsgemäße Ramm- und Bohrgeräte finden besonders im Spezialtiefbau Anwendung. Derartige Geräte bestehen im wesentlichen aus dem sogenannten Trägergerät und dem Mast oder Mäkler mit Drehantrieb und Kellystange. Mit Hilfe dieser Geräte lassen sich verrohrte oder unverrohrte Bohrungen im Boden ausführen und das anfallende Bodenmaterial zu Tage führen. Insbesondere bei den Geräten, die im Spezialtiefbau eingesetzt werden, weist der Mast bzw. Mäkler oftmals eine erhebliche Höhe auf, wobei an dessen oberen Ende eine Umlenkvorrichtung angeordnet ist, der die Aufgabe zu Grunde liegt, das Hubseil des Ramm- und Bohrgeräts in Richtung der Ramm- bzw. Bohrachse vor dem Mäkler bzw. Mast umzulenken.

Zur Erleichterung des Transportes des gesamten Bauarbeitsgerätes wird der Mast bzw. Mäkler von einer nahezu vertikalen Arbeitsposition in eine horizontale Position verfahren, in der der Mäkler bzw. Mast auf dem Trägergerät selbst gelagert ist. In der horizontalen Transportposition ist eine geringe Transporthöhe gefordert, das heißt alles was über die zulässige Transporthöhe hinaussteht, muss durch geeignete Maßnahmen unter dieses Niveau gebracht werden. Neben dem Aspekt der Transporthöhe gewinnt besonders bei beengten Straßenverhältnissen eine möglichst kurze Transportlänge des Geräts an Bedeutung. Weiterhin wird durch die in einer Transportposition schräg nach oben abstehend gerichtet am Kopf des Mastes bzw. Mäklers angeordnete Umlenkvorrichtung die Transporthöhe bzw. Transportlänge des Gerätes nochmals erhöht.

Um die Transporthöhe bezüglich der Umlenkvorrichtung zu optimieren, wird derzeit bei fast allen handelsüblichen Ramm- und Bohrgeräten die Umlenkvorrichtung unter die zulässige Transporthöhe nach hinten abgeklappt.

Aus der EP 1 655 415 A1 ist eine Bauarbeitsvorrichtung bekannt, an deren Kopf des Mastes eine Umlenkeinrichtung mit einer ersten, vorderen Umlenkrolle sowie einer zweiten, hinteren Umlenkrolle angeordnet ist. Um die zulässige Transporthöhe zu erreichen, lässt sich die vordere Umlenkrolle um eine Achse quer zur Längsachse des Mastes hinter die zweite Umlenkrolle verschwenken.

Eine ähnliche Vorrichtung ist aus der DE 101 23 403 B4 bekannt, bei der ein Mastkopf am oberen Ende des Mastes verschwenkbar angeordnet ist, der sich von einer Arbeitsposition in eine Transportposition verschwenken lässt. Hierbei wird ebenfalls der Mastkopf um eine quer zur Erstreckungsrichtung des Mastes liegende Achse von einer im nahezu rechten Winkel zum Mast anliegenden Position des Mastkopfes in eine längs zum Mast gerichtete Position verschwenkt. Gleiches gilt für das Arbeitgerät der Druckschrift US 5,269,107.

Nachteilig ist bei den Bauvorrichtungen der Druckschriften EP 1 655 415 A1, US 5,269,107 und DE 101 23 403 B4, dass sich durch das Klappen der Umlenkvorrichtung/Mastkopfes die Transportlänge um einen nicht unerheblichen Teil vergrößert.

Um ebenfalls die Transportlänge zu reduzieren, sind Geräte bekannt, die in einem separaten, zweiten Schritt das Mäkleroberteil horizontal nach vorne klappen können, um dadurch die Transportlänge zu reduzieren. Dieser Vorgang ist jedoch mit einem hohen Zeit- und Montageaufwand verknüpft, da der Mastkopf an einer weiteren Schraub- oder Bolzenverbindung gelöst werden muss um diesen entsprechend nach vorne klappen zu können.

Insbesondere bei Ramm- und Bohrgeräten mit Mäklerdreheinrichtung gibt es noch eine weitere Möglichkeit, bei der in der horizontalen Transportposition der gesamte Mäkler bzw. Mast um eine Längsachse um 90° gedreht wird, so dass die Umlenkvorrichtung unterhalb der Transporthöhe zum liegen kommt.

Keiner dieser Ansätze zeigt jedoch eine zufrieden stellende Ausführung bei der eine möglichst kurze Transportlänge und die Einhaltung der zulässigen Transporthöhe erreicht werden. Da es sich bei dem Aufrichten und Ablegen des Mastes bzw. Mäklers und der damit verbundenen Verklappung der Umlenkvorrichtung um eine regelmäßig wiederkehrende Tätigkeit handelt, sollte dieser Vorgang unter Baustellenbedingungen relativ einfach und schnell zu bewerkstelligen sein, wenn möglich ohne zusätzliche Hilfsmittel durchführbar sein.

Aufgabe der vorliegenden Erfindung ist es daher, ein Ramm- und Bohrgerät zur Verfügung zu stellen, bei dem ein umlegbarer Mäkler bzw. Mast mit einer am Kopfende angelenkten Umlenkvorrichtung möglichst einfach von einer Betriebs- in eine Arbeitsposition verfahrbar ist, bei der die zulässige Transporthöhe sowie eine möglichst kurze Transportlänge erzielbar sind.

Erfindungsgemäß wird diese Aufgabe gemäß Anspruch 1 gelöst. Bei diesem Ramm- und Bohrgerät ist ein Mäkler und eine Umlenkvorrichtung zum Umlenken eines Seils vorgesehen, welche am Kopf des Mäklers verschwenkbar zwischen zumindest einer Transportposition und zumindest einer Arbeitsposition angelenkt ist. Weiterhin ist die Umlenkvorrichtung um eine schräg auf der Erstreckungsachse des Mäklers stehende Achse drehbar. Aufgrund der erfindungsgemäßen drehbaren Anlenkung an das obere Ende des Mastes bzw. Mäklers ist die Umlenkvorrichtung derart verdrehbar, so dass die Positionierung der Umlenkvorrichtung in einer Transportposition einer nach dem Stand der Technik bekannten Position entspricht, bei der die Umlenkvorrichtung in einem ersten Schritt nach hinten abgeklappt wird und in einem separaten, zweiten Schritt die Umlenkvorrichtung horizontal nach vorne geklappt wird. Der erfindungsgemäße Drehvorgang der Umlenkvorrichtung ist dabei auch unter Baustellenbedingungen relativ einfach und schnell zu bewerkstelligen, da sich die gewünschte Bewegung der Umlenkvorrichtung in einem einzigen Schritt ausrichten lässt. Darüber hinaus entfallen die Auftrennung separater Schraub- oder Bolzenverbindungen eines zweiten Schritts wie er aus dem Stand der Technik bekannt ist.

Vorteilhafterweise ist der Mäkler zwischen einer etwa vertikalen Arbeitsstellung und einer etwa horizontalen Transportstellung verklappbar. In der besagten Arbeitsstellung erstreckt sich der Mäkler entlang einer vertikalen Achse an der Vorderseite des Trägerfahrzeugs. Dabei ist die Umlenkvorrichtung am oberen Ende des Mäklers bzw. Mastes drehbar angelenkt, wobei die Umlenkvorrichtung in Arbeitsposition quer zum Mast bzw. Mäkler gerichtet ist und sich vom oberen Mast/Mäkler-Ende nach vorne erstreckt. Im Betrieb liegt der Umlenkvorrichtung die Aufgabe zugrunde, das Seil in Richtung der Ramm- bzw. Bohrachse vor den Mäkler bzw. Mast umzulenken. Im Detail erstreckt sich der Seilverlauf von der Rückseite des Mastes bzw. Mäklers vom Trägerfahrzeug ausgehend nach oben über die Umlenkvorrichtung am Kopf des Mastes bzw. Mäklers und wird durch diese in die genannte Ramm- bzw. Bohrachsrichtung entlang der Mäkler/Mast-Vorderseite umgelenkt.

In einer Transportposition ist der Mäkler bzw. Mast in eine horizontale Transportposition nach hinten umlegbar. In der Regel bildet dabei der umgelegte Mäkler bzw. Mast in der Transportposition die oberste Kante des Ramm- und Bohrgeräts, wobei die quer zum Mast bzw. Mäkler ausgerichtete Umlenkvorrichtung den obersten Punkt des gesamten Mäklers bzw. Mastes bildet.

Durch die erfindungsgemäße Ausbildung der Drehachse der drehbar angelenkten Umlenkvorrichtung lässt sich diese in der Transportposition derart verdrehen, so dass die Transporthöhe und die Transportlänge des Ramm- und Bohrgerätes beeinflußbar sind.

Vorteilhafterweise ist die Umlenkvorrichtung in der Transportposition in einem Schritt seitlich nach vorne unten an den horizontal liegenden Mäkler um die genannte Achse drehbar. Mittels dieser Drehbewegung lässt sich die aktuelle Transporthöhe des Ramm- und Bohrgerätes auf die oberste Kante des Mäklers bzw. Mastes reduzieren und das hintere/obere Mast- bzw. Mäklerende ist nicht mehr durch die Umlenkvorrichtung definiert, sondern durch den Anlenkpunkt der Umlenkvorrichtung an den Mast bzw. Mäkler. Dabei entspricht die Transportposition der Umlenkvorrichtung nach dem die Umlenkvorrichtung um die erfindungsgemäße Drehachse verdreht worden ist, einer nach dem Stand der Technik bekannten Lösung, bei der die Umlenkvorrichtung in einem ersten Schritt nach hinten abgeklappt und in einem separaten, zweiten Schritt mittels einer weiteren Austrennung einer Schraub- und Bolzenverbindung horizontal nach vorne geklappt wurde. Dabei ist es denkbar, dass die Umlenkvorrichtung durch die Drehbewegung entweder rechtsseitig oder linkseitig oder beidseitig an die Mäkler/Mast-Seite drehbar ist.

Es kann vorgesehen sein, dass durch die Drehbewegung der Umlenkvorrichtung in der Transportposition die Transportlänge des Ramm- und Bohrgerätes reduzierbar ist. In der günstigsten Variante lässt sich dabei die Transportlänge des Ramm- und Bohrgerätes in etwa um die Länge der Umlenkvorrichtung reduzieren. In äußerst vorteilhafter Weise lässt sich durch die erfindungsgemäße Drehung der Umlenkvorrichtung um den Mast bzw. Mäkler eine gewünschte bzw. zulässige Transportlänge des Gerätes erreichen.

In einer weiteren vorteilhaften Ausgestaltung der Erfindung ist durch die Drehbewegung der Umlenkvorrichtung in der Transportposition die Transporthöhe des Ramm- und Bohrgerätes reduzierbar. Dabei lässt sich durch die Drehbewegung der Umlenkvorrichtung die Transporthöhe des Ramm- und Bohrgerätes derart reduzieren, so dass die oberste Kante des Gerätes entweder von einem abgesenkten Teil der Umlenkvorrichtung oder im günstigsten Fall von der Oberkante des Mäklers bzw. Mastes gebildet wird.

Äußerst vorteilhaft ist, dass durch die Drehbewegung der Umlenkvorrichtung in der Transportposition in einem Schritt die Transportlänge und die Transporthöhe des Ramm- und Bohrgerätes reduzierbar sind. Dadurch wird der Montage- bzw. Demontagevorgang eines Ramm- und Bohrgerätes, d.h. das Aufstellen des Gerätes von einer Arbeitsposition in eine Transportposition, wesentlich vereinfacht und beschleunigt. Folglich lässt sich durch die erfindungsgemäße Drehbewegung durch einfache Mittel die zulässige Transporthöhe des Ramm- bzw. Bohrgerätes erreichen sowie eine möglichst kurze Transportlänge erzielen, die besonders bei beengten Straßenverhältnissen stark an Bedeutung hinzugewinnt.

Weiterhin vorteilhaft ist es, dass die Umlenkvorrichtung derart in eine Transportposition um die Achse drehbar ist, dass die Transportbreite des Ramm- und Bohrgerätes durch diese nicht beeinflußt ist. Damit wird die Transportbreite, d.h. die Gesamtbreite des Ramm- und Bohrgerätes in der Transportposition, einzig von der Fahrgestellbreite des Gerätes oder sonstiger Komponenten bestimmt.

Die vorliegende Erfindung wird nun anhand eines Ausführungsbeispiels sowie Zeichnungen näher erläutert. Dabei zeigen:
- Figur 1:: eine Seitenansicht der horizontalen Transportposition eines erfindungs- gemäßen Ramm- und Bohrgeräts und
- Figur 2:: eine Draufsicht auf das erfindungsgemäße Ramm- und Bohrgerät in ei- ner horizontalen Transportposition.

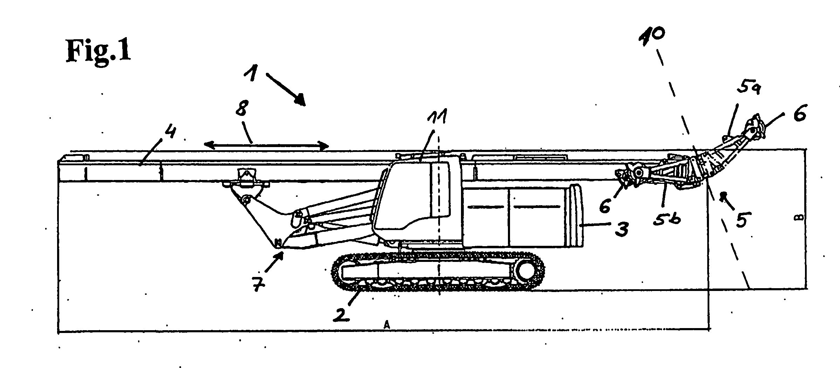

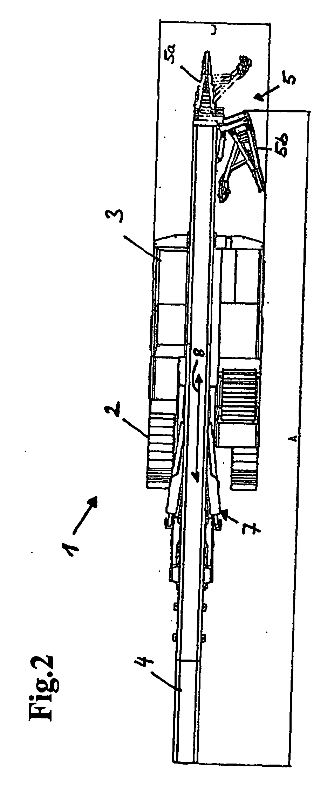

Ein Ausführungsbeispiel des erfindungsgemäßen Ramm- und Bohrgerätes ist in Figur 1 und 2 dargestellt. Das Ramm- und Bohrgerät weist einen als Raupenfahrzeug ausgebildeten Unterwagen 2 und einen auf dem Unterwagen 2 angeordneten Oberwagen 3 auf. An dem Oberwagen 3 ist mit Hilfe einer Haltevorrichtung 7 ein Mäkler 4 montiert. Mittels der Haltevorrichtung 7 lässt sich der Mäkler 4 von einer vertikal ausgerichteten Arbeitsposition, in der die Längsachse 8 des Mäklers 4 im Wesentlichen vertikal zur Bodenfläche verläuft und der Mäkler 4 sich vor dem Unterwagen 2 und dem Oberwagen 3 des Ramm- und Bohrgerätes 1 erstreckt, in eine horizontal ausgerichtete Transportposition verfahren, in der seine Längsachse 8 in etwa horizontal bezüglich der Bodenoberfläche verläuft. Die Haltevorrichtung 7 ist dabei einseitig am Mäkler 4 angelenkt und mit der entgegengesetzten Seite am Oberwagen 3 des Ramm- und Bohrgeräts 1.

Am oberen Ende des Mäklers 4 ist eine Umlenkvorrichtung 5 in Form eines Galgen bzw. Rollenkopfes drehbar angelenkt, der im Betrieb in einer Arbeitsposition die Aufgabe hat, das Hubseil in die Ramm- bzw. Bohrachse vor den Mäkler 4 umzulenken. Zum Umlenken weist der Galgen 5 dabei mehrere Rollen 6 auf, die das Seil zur Befestigung des Arbeitsgerätes in der gewünschten Richtung zu führen.

Die beiden Figuren 1 und 2 zeigen ein in der Transportposition befindliches Ramm- und Bohrgerät 1. Beim Verfahren des Mäklers 4 in die Transportposition wird dieser über die Haltevorrichtung 7 von seinem oberen Ende aus gesehen nach hinten in eine horizontale Lage geklappt, wobei der Mäkler auf der Oberseite des Oberwagens 3 abgelegt ist und das obere Ende des Mäklers 4 mit dem angelenkten Galgen 5 auf der Rückseite des Ramm- und Bohrgerätes 1 entgegen der Fahrtrichtung herausragt.

Erfindungsgemäß ist der Galgen 5 um eine schräg auf der Erstreckungsachse 8 des Mäklers 4 stehenden Achse 10 drehbar angelenkt. In der Betriebsposition steht der Galgen 5 mit seinen Umlenkrollen 6 quer zur Längsachse 8 des Mäklers 4, wobei zumindest eine Umlenkrolle 6 tangential mit der Ramm- und Bohrachse des Ramm- und Bohrgerätes 1 fluchtet.

In der in Figur 1 gezeigten Transportstellung des Ramm- und Bohrgerätes 1 ist der Galgen 5 einmal in seiner angelenkten Betriebsstellung 5a am Mäkler 4 und in einer um die Achse 10 gedrehten Stellung 5b der erfindungsgemäßen Transportstellung abgebildet. Dabei wird ersichtlich, dass durch die erfindungsgemäße Drehbewegung des Galgens 5 um die Achse 10 die aktuelle Transporthöhe auf die Transporthöhe B reduziert wird, welche maßgeblich durch die Oberkante des Mäklers 4 bzw. die Fahrerkabine 11 des Oberwagens 3 markiert ist. Weiterhin wird durch diese Drehbewegung aber nicht nur die Transporthöhe, sondern vielmehr auch die Transportlänge des Ramm- und Bohrgerätes auf eine optimierte Transportlänge A reduziert. Dabei erstreckt sich die optimierte Transportlänge A von der Unterseite des Mäklers 4 bis hin zur Anlenkstelle des Galgens 5 am oberen Ende des Mäklers 4.

Figur 2 zeigt eine Draufsicht des erfindungsgemäßen Ramm- und Bohrgerätes, wobei sich der Mäkler 4 ebenfalls in der nach hinten geklappten Transportposition befindet. Durch die Drehbewegung des Galgens 5 um die Achse 10 wird der Galgen in der Transportposition in einem Schritt seitlich nach vorne unten an den horizontal liegenden Mäkler 4 gedreht. Dabei zeigt Figur 2 im speziellen, dass durch die Lagerung des Galgens 5 in der Transportposition 5b die Fahrzeugbreite C, welche durch die Breite des Unterwagens 2 oder des Oberwagens 3 definiert ist, nicht überschritten wird.

In dem konkreten Ausführungsbeispiel aus den Figuren 1 und 2 ist der Galgen 5 linksseitig nach unten an den Mäkler 4 hin um die Achse 10 gedreht. Denkbar ist hier jedoch ebenfalls eine rechtsseitige Drehung des Galgens an die rechte Seite des Mäklers 4 hin.

## Patentansprüche

1. Ramm- und Bohrgerät (1) mit einem verklappbaren Mäkler (4), einer Umlenkvorrichtung (5) zum Umlenken eines Seils, welche am Kopf des Mäklers (4) verschwenkbar zwischen zumindest einer Transportposition (5b) und zumindest einer Arbeitsposition (5a) angelenkt ist,
**dadurch gekennzeichnet,**
**dass** die Umlenkvorrichtung (5) um eine schräg auf der Erstreckungsachse (8) des Mäklers (4) stehende Achse (10) drehbar ist.

2. Ramm- und Bohrgerät (1) nach Anspruch 1, **dadurch gekennzeichnet, dass** der Mäkler (4) zwischen einer etwa vertikalen Arbeitsstellung und einer etwa horizontalen Transportstellung verklappbar ist.

3. Ramm- und Bohrgerät (1) nach Anspruch 1 oder 2, **dadurch gekennzeichnet, dass** die Umlenkvorrichtung (5) in der Transportposition (5b) in einem Schritt seitlich nach vorne unten an den horizontal liegenden Mäkler (4) um die genannte Achse (10) drehbar ist.

4. Ramm- und Bohrgerät (1) nach einem der vorhergehenden Ansprüche, **dadurch gekennzeichnet, dass** durch die Drehbewegung der Umlenkvorrichtung (5) in der Transportposition die Transportlänge (A) des Ramm- und Bohrgerätes (1) reduzierbar ist.

5. Ramm- und Bohrgerät (1) nach einem der vorhergehenden Ansprüche, **dadurch gekennzeichnet, dass** durch die Drehbewegung der Umlenkvorrichtung (5) in der Transportposition die Transporthöhe (B) des Ramm- und Bohrgerätes (1) reduzierbar ist.

6. Ramm- und Bohrgerät (1) nach einem der vorhergehenden Ansprüche, **dadurch gekennzeichnet, dass** durch die Drehbewegung der Umlenkvorrichtung (5) in der Transportposition in einem Schritt die Transporttänge (A) und die Transporthöhe (B) des Ramm- und Bohrgerätes (1) reduzierbar ist.

7. Ramm- und Bohrgerät (1) nach einem der vorhergehenden Ansprüche, **dadurch gekennzeichnet, dass** die Umlenkvorrichtung (5) derart in eine Transportposition (5b) um die Achse (10) drehbar ist, so dass die Transportbreite (C) des Ramm- und Bohrgerätes (1) durch diese nicht beeinflußt ist.

## Claims

1. A piling and drilling rig (1) having a foldable leader (4), a deflection apparatus (5) for the deflection of a rope which is pivotally connected to the head of the leader (4) in a manner pivotable between at least one transport position (5b) and at least one working position (5a),
**characterized in that**
the deflection apparatus (5) is rotatable about an axis (10) standing obliquely on the axis of extent (8) of the leader (4).

2. A piling and drilling rig (1) in accordance with claim 1, **characterized in that** the leader (4) is foldable between an approximately vertical working position and an approximately horizontal transport position.

3. A piling and drilling rig (1) in accordance with either of claims 1 or 2, **characterized in that** the deflection apparatus (5) is rotatable in the transport position (5b) in one step about the named axis (10) laterally to the bottom front at the horizontally disposed leader (4).

4. A piling and drilling rig (1) in accordance with one of the preceding claims, **characterized in that** the transport length (A) of the piling and drilling rig (1) can be reduced by the rotational movement of the deflection apparatus (5) in the transport position.

5. A piling and drilling rig (1) in accordance with one of the preceding claims, **characterized in that** the transport height (B) of the piling and drilling rig (1) can be reduced by the rotational movement of the deflection apparatus (5) in the transport position.

6. A piling and drilling rig (1) in accordance with one of the preceding claims, **characterized in that** the transport length (A) and the transport height (B) of the piling and drilling rig (1) can be reduced in one step by the rotational movement of the deflection apparatus (5) in the transport position.

7. A piling and drilling rig in accordance with one of the preceding claims, **characterized in that** the deflection apparatus is rotatable about the axis (10) into a transport position (5b) such that the transport width (C) of the piling and drilling rig (1) is not influenced by it.

## Revendications

1. Appareil de battage et de forage (1) avec une jumelle pliable (4), un dispositif de déviation (5) pour la déviation d'un câble, qui est articulé à la tête de la jumelle (4) d'une manière pivotante entre au moins une position de transport (5b) et au moins une position de travail (5a), **caractérisé en ce que** le dispositif de déviation (5) peut tourner autour d'un axe (10) s'étendant en biais sur l'axe d'extension (8) de la jumelle (4).

2. Appareil de battage et de forage (1) selon la revendication 1, **caractérisé en ce que** la jumelle (4) est pliable entre une position de travail à peu près verticale et une position de transport à peu près horizontale.

3. Appareil de battage et de forage (1) selon la revendication 1 ou 2, **caractérisé en ce que** le dispositif de déviation (5), dans la position de transport (5b), peut être amené à tourner autour de l'axe précité (10) en une étape sur le côté vers l'avant en bas à la jumelle (4) s'étendant horizontalement.

4. Appareil de battage et de forage (1) selon l'une des revendications précédentes, **caractérisé en ce que** par le mouvement de rotation du dispositif de déviation (5) dans la position de transport, la longueur de transport (A) de l'appareil de battage et de forage (1) peut être réduite.

5. Appareil de battage et de forage (1) selon l'une des revendications précédentes, **caractérisé en ce que** par le mouvement de rotation du dispositif de déviation (5) dans la position de transport, la hauteur de transport (B) de l'appareil de battage et de forage (1) peut être réduite.

6. Appareil de battage et de forage (1) selon l'une des revendications précédentes, **caractérisé en ce que** par le mouvement de rotation du dispositif de déviation (5) dans la position de transport, en une étape, la longueur de transport (A) et la hauteur de transport (B) de l'appareil de battage et de forage (1) peuvent être réduites.

7. Appareil de battage et de forage (1) selon l'une des revendications précédentes, **caractérisé en ce que** le dispositif de déviation (5) peut être amené à tourner de telle sorte dans une position de transport (5b) autour de l'axe (10) qu'elle n'a pas d'effet sur la largeur de transport (C) de l'appareil de battage et de forage (1).
